**Europäisches Patentamt**

**European Patent Office**

**Office européen des brevets**

(11) Veröffentlichungsnummer: **0 202 627 B1**

## (12) EUROPÄISCHE PATENTSCHRIFT

(45) Veröffentlichungstag der Patentschrift: **09.09.92**

(21) Anmeldenummer: **86106703.1**

(22) Anmeldetag: **16.05.86**

(51) Int. Cl.⁵: **G06F 13/28**

(54) Schnittstellenschaltung zur zeichenorientierten Datenübertragung zwischen einer Leitstation und wenigstens einer Folgestation.

(30) Priorität: **22.05.85 DE 3518451**

(43) Veröffentlichungstag der Anmeldung:
**26.11.86 Patentblatt 86/48**

(45) Bekanntmachung des Hinweises auf die
Patenterteilung:
**09.09.92 Patentblatt 92/37**

(84) Benannte Vertragsstaaten:
**AT BE CH DE FR GB IT LI NL SE**

(56) Entgegenhaltungen:
**FR-A- 2 319 158**
**US-A- 4 075 691**
**US-A- 4 488 226**

**IBM TECHNICAL DISCLOSURE BULLETIN, vol. 25, no. 3B, August 1982, pages 1601-1603, New York, US; C.E. CRAMER et al.: "Hardware augmentation for improved performance of communications protocol control"**

**IBM TECHNICAL DISCLOSURE BULLETIN, vol. 27, no. 7B, December 1984, pages 4156-4158, New York, US; G.T. DAVIS et al.: "High speed communications controller with automatic control byte monitor"**

**ELECTRONIC DESIGN, vol. 31, no. 22, October 1983, pages 167-178, Waseca, MN, Denville, NJ, US; "DMA controller meshes with 68000 systems"**

(73) Patentinhaber: **Siemens Nixdorf Informationssysteme AG**
**Otto-Hahn-Ring 6**
**W-8000 München 83(DE)**

(72) Erfinder: **Schmidt, Franz, Dipl.-Ing.**
**Bergstrasse 15**
**W-8875 Offingen(DE)**
Erfinder: **Heinrich, Martin, Dipl.-Ing.**
**Ganghoferstrasse 86a**
**W-8000 München 70(DE)**

(74) Vertreter: **Fuchs, Franz-Josef, Dr.-Ing. et al**
**Postfach 22 13 17**
**W-8000 München 22(DE)**

EP 0 202 627 B1

**Beschreibung**

Die Erfindung bezieht sich auf eine Schnittstellenschaltung nach dem Oberbegriff des Patentanspruchs 1.

Bei Mikrorechnersystemen ist es bekannt, zur Steuerung des Datentransfers zwischen einem Datensender, zum Beispiel einem Speicher und einem Datenempfänger, zum Beispiel einem peripheren Gerät eine sogenannte Direktspeicherzugriffsteuerung - kurz DMA-Steuerung - zu verwenden, die den Mikroprozessor insofern entlastet, als sie unter weitgehender Umgehung des Prozessors einen schnellen Datentransport zwischen Datensender und Datenempfänger ermöglicht.

Aus IBM Technical Disclosure Bulletin Vol. 25, no. 3b, August 1982 ist ein Hardwarezusatz - eine sogenannte Verbesserungslogik (2) - zur verbesserten Kontrolle eines Datenaustauschprotokolls bei einem Datenaustauschsystem, das sich einer Direkt-Speicherzugriffssteuerung bedient, bekannt. Dabei ist eine Einrichtung zur Steuerung des Datenaustauschprotokolls (1) vorgesehen, die über ein Bussystem (6) mit der Direkt-Speicherzugriffssteuerung (5) verbunden ist. Ebenso ist die Verbesserungslogik (2), die die Funktion der Einrichtung zur Steuerung des Datenaustauschprotokolls (1) unterstützt, über ein Bussystem mit der Direkt-Speicherzugriffssteuerung (5) verbunden.

Die der vorliegenden Erfindung zugrundeliegende Aufgabe besteht nun darin, eine Schnittstellenschaltung der eingangs genannten Art so zu verbessern, daß auf eine auftretende Störung bei der Datenübertragung möglichst schnell reagiert wird derart, daß von der DMA-Steuerung, die einen Störungsfall nicht allein abwickeln kann, sehr schnell auf den Mikroprozessor umgeschaltet wird, der dann je nach Art der Störung entsprechend reagieren kann.

Diese Aufgabe wird erfindungsgemäß durch die kennzeichnenden Merkmale des Patentanspruchs 1 gelöst. Der Vorteil dieser Schaltung besteht darin, daß der DMA-Betrieb während eines störungsfreien Datentransfers absolut ohne Mithilfe des Prozessors durchgeführt werden kann und der Prozessor nur im Störungsfall eingreifen muß.

Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen

FIG 1 das Prinzipschaltbild einer Schnittstellenschaltung gemäß der Erfindung

FIG 2 die Abwicklung eines Datentransfers von einer Folgestation zur Leitstation

FIG 3 die Abwicklung eines Datentransfers von der Leitstation zu einer Folgestation

FIG 4 ein detailliertes Schaltbild einer Quittungsaustausch-Steuerung in einer Schnittstellenschaltung nach FIG 1.

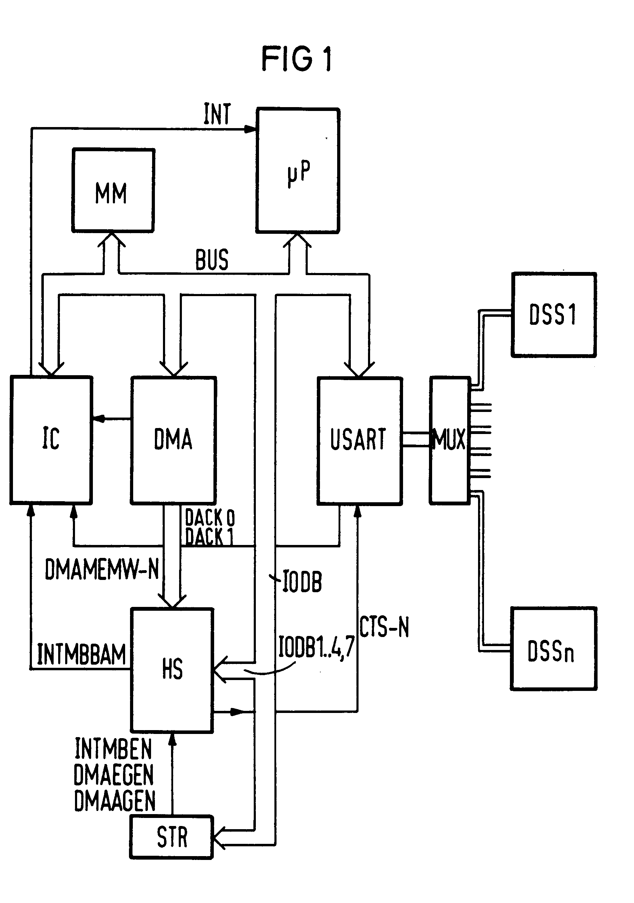

Die FIG 1 zeigt eine beispielsweise in einer Mehrfachsteuerung vorgesehene Schnittstellenschaltung, über die der Datentransfer zwischen einer Datenverarbeitungsanlage einerseits und einem Datensichtgerät andererseits abgewickelt wird. Das dargestellte Blockschaltbild zeigt im einzelnen einen Mikroprozessor µP, der über ein Bussystem BUS mit einem Speicher MM, einer Direktspeicherzugriffsteuerung DMA sowie mit einer Synchron-Asynchron-Sende-/Empfangseinrichtung USART verbunden ist. Die Datensichtstation DSS ist über eine Datenübertragungsleitung an der Sende-/Empfangseinrichtung USART angeschlossen. Zum Anschluß weiterer Datensichtstationen werden die Signalleitungen der Sende-/Empfangseinrichtung USART entweder mit Hilfe eines Multiplexers MUX wahlweise mit den Anschlußleitungen der Datensichtstationen DSSI...DSSn verbunden oder aber es sind entsprechend viele Sende-/Empfangseinrichtungen an das Bus-System anzuschließen. Am Bussystem BUS sind ferner noch eine Unterbrechungssteuerung IC sowie eine Quittungsaustausch-Steuerung HS und ein Steuerregister STR angeschlossen. Die Quittungsaustauschsteuerung HS ist außerdem direkt mit der DMA-Steuerung DMA verbunden. Schließlich ist die Quittungsaustausch-Steuerung HS über Steuerleitungen mit der Sende-/Empfangseinrichtung USART, mit der Unterbrechungssteuerung IC und mit dem Steuerregister STR verbunden. Weitere Steuerleitungen verlaufen zwischen der Sende-/Empfangseinrichtung USART und der Unterbrechungssteuerung IC sowie zwischen der Unterbrechungssteuerung IC und dem Mikroprozessor µP. Die Steuerung eines Datentransfers wird mit Hilfe eines Sendesignals CTS in der Sende-/Empfangseinrichtung USART realisiert, wobei jeweils nur dann Zeichen gesendet werden, wenn dies durch ein vorher freigegebenes Sendesignal CTS erlaubt wird. Ein Datentransfer-Zyklus, zum Beispiel die Ausgabe eines Datums oder Befehls durch die Mehrfachsteuerung MSF an die Datensichtstation DSS und das anschließende Einlesen eines von der Datensichtstation zurückgesendeten Datums bzw. einer Meldung läuft wie folgt ab:

Die Sende-/Empfangseinrichtung USART gibt ein Zeichen n an die Übertragungsleitung aus und stellt eine DMA-Anforderung, damit das nächste Sendezeichen, das heißt das Zeichen n + 1 in den Sendepuffer der Sende-/Empfangseinrichtung USART geladen wird. Diese DMA-Anforderung deaktiviert außerdem das Sendesignal CTS und verhindert damit zunächst das Aussenden des Zeichens n + 1. Aufgrund der hier vorgesehenen Quittungsprozedur löst jedes Sendezeichen ein entsprechendes Anwortzeichen von der Folgestation aus. Sobald dieses Antwortzeichen in den Empfangspuffer der Sende-/Empfangseinrichtung USART eingelaufen ist, wird dieses Antwortzeichen durch die Direktspeicherzugriffsteuerung DMA in den Speicher MM übertragen. Während des Transfers von der Sende-/Empfangseinrichtung USART zum Speicher MM decodiert die Quittungsaustauschsteuerung HS das Zeichen und veranlaßt

a) eine Freigabe des Sendezeichens n + 1 in der Sende-/Empfangseinrichtung durch eine Aktivierung des Sendesignals CTS, wenn das einlaufende Zeichen ein Datum (bei Eingabe) oder eine Gutmeldung (bei Ausgabe) ist,

b) eine Unterbrechung, wenn das eingelaufene Zeichen einen Fehler signalisiert; das Sendesignal CTS bleibt dann deaktivert mit der Folge, daß das Aussenden des Sendezeichens n + 1 verhindert wird.

In einer Unterbrechungsroutine wird nun die Fehlermeldung analysiert und ein entsprechender Befehl an die Datensichtstation DSS ausgegeben. Dieser Befehl überschreibt außerdem das in der Sende-/Empfangseinrichtung USART bereitgestellte Sendezeichen n + 1. Da die Nummer des überschriebenen Sendezeichens in der DMA-Steuerung DMA gespeichert ist, kann sie zur Wiederherstellung des entsprechenden Sendezeichens abgerufen werden. Der Transfer-Zyklus ist damit beendet.

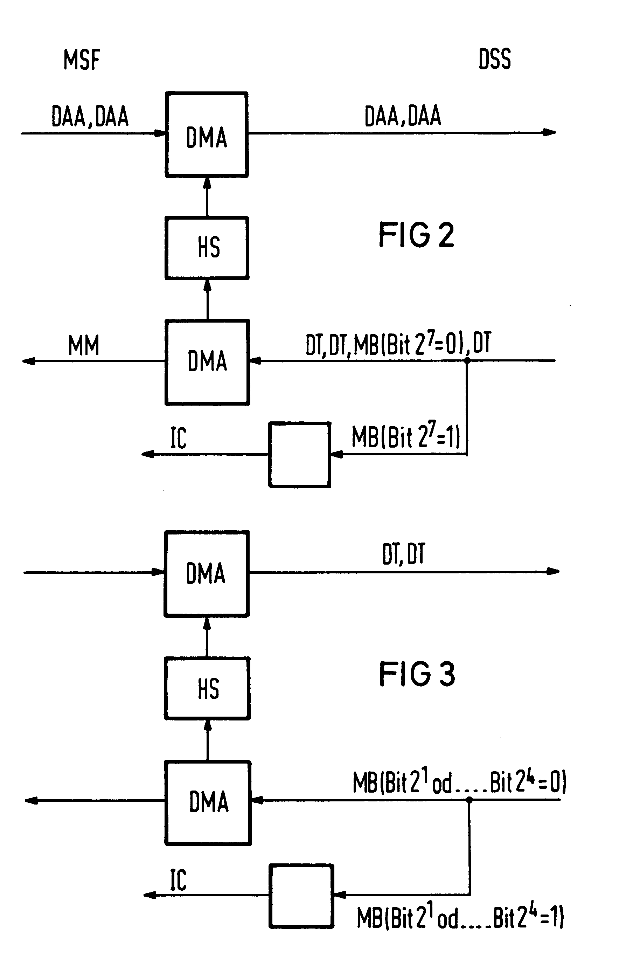

Ein- und Ausgabe-Transfers werden im folgenden anhand der in den Figuren 2 und 3 dargestellten Funktionsschaltbilder beschrieben, wobei aus Gründen der Übersichtlichkeit nur die für die Erläuterung der Erfindung wesentlichen Funktions-Bausteine dargestellt sind. In der FIG 2 ist der Datentransfer zwischen einer Mehrfachsteuerung MSF und einer Datensichtstation DSS im Fall der Dateneingabe, d.h. des Datentransfers von der als Folgestation fungierenden Datensichtstation DSS zur Leitstation, d.h. zur Mehrfachsteuerung MSF gezeigt. Bei der Dateneingabe veranlaßt die Mehrfachsteuerung MSF durch Ausgabe eines Befehls, zum Beispiel Datum DAA abgeben an die Datensichtstation DSS die Eingabe eines zugehörigen Zeichens durch die Datensichtstation DSS. Ist dieses bei der Mehrfachsteuerung MSF einlaufende Zeichen ein Datum DT, so wird dieses Datum DT durch die DMA-Steuerung in den Datenspeicher MM übertragen und gleichzeitig gibt die Quittungsaustauschsteuerung HS die Ausgabe des nächsten Befehls: "Datum abgeben" frei. Beantwortet die Datensichtstation DSS dagegen den Eingabe-Befehl mit einer Meldung MB anstelle eines Datums DT, dann generiert die Quittungsaustauschsteuerung HS eine Unterbrechung mit der Folge, daß die DMA-gesteuerte Befehlsausgabe in der Mehrfachsteuerung MSF gesperrt wird. Gleichzeitig wird das im Mikroprozessor μP gerade ablaufende Programm unterbrochen und eine Unterbrechungs-Routine gestartet, die dann je nach Art der Meldung entscheidet, ob zum Beispiel der DMA-Transfer wieder neu gestartet werden kann oder ob eine andere Reaktion erforderlich ist. Die Meldungen MB, die von der Datensichtstation zurückkommen, haben, je nachdem ob es sich um eine Eingabe- oder um eine Ausgabeoperation handelt, eine unterschiedliche Bedeutung, die durch entsprechende Bits innerhalb des Meldebytes MB angezeigt wird. Im vorliegenden Fall der Dateneingabe ist das Meldebit $2^7 = 1$ maßgebend.

Bei einer Datenausgabe, das heißt bei einem Datentransfer von der Mehrfachsteuerung MSF zur Datensichtstation DSS (siehe FIG 3) gibt die Mehrfachsteuerung MSF nach Ausgabe eines Schreibbefehls und der entsprechenden Antwort durch die Datensichtstation DSS über die DMA-Steuerung ein Datum DT aus und wartet auf die Antwortmeldung. Die Quittungsaustauschsteuerung HS gibt dann entsprechend der Wertigkeit der eingelaufenen Meldung MB entweder die DMA-Steuerung zur Ausgabe des nächsten Datums frei oder generiert im Fehlerfall eine Unterbrechung und eine Sperrung der DMA-Steuerung. Im Fehlerfall kommen bei der Datenausgabe folgende Meldebits innerhalb des Meldebytes MB in Betracht:

Bit $2^1$ = unklar
Bit $2^2$ = warten - kurzzeitig
Bit $2^3$ = warten - länger
Bit $2^4$ = Übertragungsfehler

In einer Unterbrechungs-Routine werden schließlich aufgrund der eingelaufenen Meldung MB (Bits $2^1$ ...$2^4$) entsprechende Reaktionen eingeleitet.

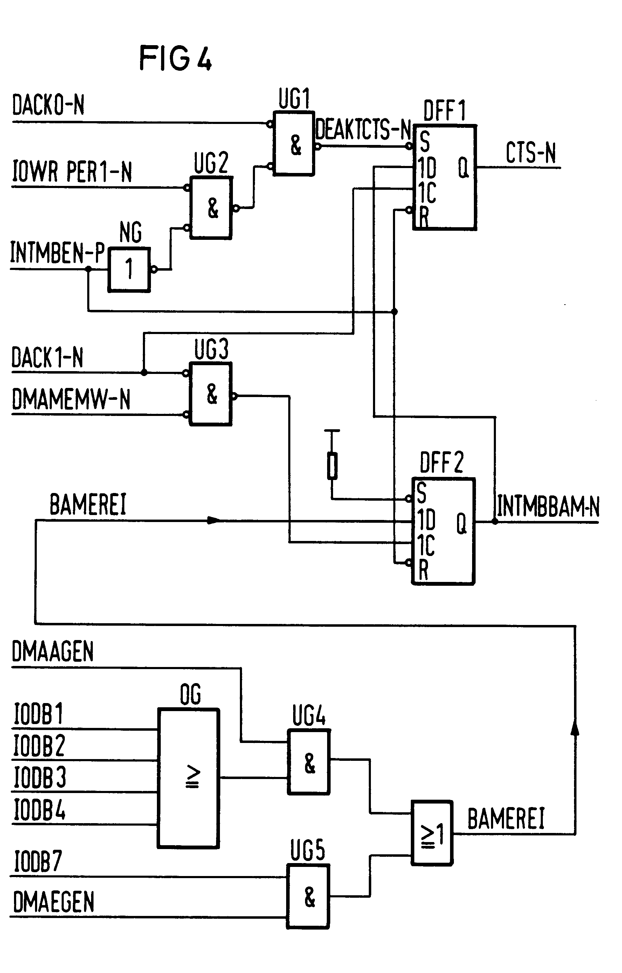

Die Arbeitsweise der Quittungsaustausch-Steuerung HS wird im folgenden anhand des in der FIG 4 dargestellten Schaltbildes erläutert. Das Aussenden von Zeichen aus der Sende-/Empfangseinrichtung USART wird durch das Sendesignal CTS-N gesteuert, das am ersten D-Flipflop DFF1 generiert wird. Zeichen werden nur gesendet, wenn das Sendesignal CTS aktiv (N-aktiv) ist. Dieses Sendesignal CTS kann asynchron durch ein am Setzeingang S des ersten D-Flipflops DFF1 auftretendes Signal DEAKTCTS-N deaktivert und durch Schalten eines Freigabesignals INTMBEN auf "Ø" aktiviert werden. Synchron kann das Sendesignal CTS dadurch aktiviert werden, daß das Ausgangssignal INTMBBAM-P eines zweiten D-Flipflops DFF2 bei ansteiger Flanke des von der DMA-Steuerung generierten Empfangskanalsignals DACK1-N durchgeschaltet wird. Das am Setzeingang S des ersten D-Flipslops DFF1 auftretende Signal DEAKTCTS-N entsteht aus einer UND-Verknüpfung (UND-Glieder UG1, UG2) eines Sendekanalsignals DACKØ-N und eines Schreibsignals IOWR PERI-N mit dem durch ein Nicht-Glied NG invertierten Freigabesignal INTMBEN-P. Dieses Signal DEAKTCTS-N wird dann aktiv, wenn der der Sendeeinrichtung in der Sende-/Empfangseinrichtung USART zugeordnete DMA-Kanal (Signal DACKØ-N) ein Sendezeichen in die Sende-/Empfangseinrichtung USART schreibt (Schreibsignal IOWR PERI-N) und die Quittungs-austauschsteuerung HS freigegeben ist (Freigabesignal INTMBEN-P = 1). Ein aktives Signal DEAKTCTS-N deaktiviert das Sendesignal CTS-N und verhindert damit das Aussenden eines Zeichens.

Das Freigabesignal INTMBEN kann durch das Steuerregister STR auf N bzw. P geschaltet werden und aktiviert zu Beginn eines Datentransfers das Sendesignal CTS-N, mit dem das Aussenden des ersten Zeichens ausgelöst wird. Schreibt der der Empfangseinrichtung in der Sende-/Empfangseinrichtung USART zugehörige DMA-Kanal (Signal DACKI-N, konjunktiv verknüpft über das UND-Glied UG3 mit dem Schreibsignal DMAMEMW-N der DMA-Steuerung an den Speicher), dann wird das Sende-/Empfangs-Zustandssignal BAMEREI über das zweite D-FLipflop DFF2 durch die aufsteigende Flanke des DMA-Empfangskanalsignals DACKI-N am ersten D-Flipflop DFF1 auf den Q-Ausgang dieses ersten D-Flipflops DFF1 durchgeschaltet. Ist das Sende-/Empfangs-Zustandssignal BAMEREI = Ø (Gutfall), dann wird das Sendesignal CTS-N aktiv und ein Zeichen kann gesendet werden. Ist dagegen das Sende-/Empfangs-Zustandssignal BAMEREI = 1, dann bleibt das Sendesignal CTS inaktiv mit der Folge, daß durch das Signal INTMBBAM eine Unterbrechung generiert wird. Das Sende-Empfangs-Zustandssignal BAMEREI entspricht im Ausgabe-Zustand der ODER-Verknüpfung (ODER-Glied OG) der Bits IODB1...IODB4 des in der Sende-/Empfangseinrichtung USART eingelaufenen Antwortzeichens, gewichtet (UND-Glied UG4) mit einem bei DMA-Ausgabe aus dem Steuerregister STR kommenden Freigabesignal DMAAGEN. Im Eingabezustand entspricht das Sende-/Empfangs-Zustandssignal BAMEREI der UND-Verknüpfung (UND-Glied UG5) des Bits IODB7 des in der Sende-/Empfangseinrichtung USART eingelaufenen Zeichens mit dem bei DMA-Eingabe aus dem Steuerregister STR kommenden Freigabesignal DMAEGEN.

## Patentansprüche

1. Schnittstellenschaltung zur zeichenorientierten Datenübertragung zwischen einer Leitstation und einer Folgestation unter Verwendung eines Mikrocomputers mit direkter Speicherzugriffsteuerung, sowie wenigstens einer mit dem Bussystem des Mikrocomputers verbundenen Sende-/Empfangseinrichtung zur Anschaltung wenigstens einer Folgestation und mit einer Einrichtung zur Steuerung des Datenaustauschs, die sowohl mit dem Bussystem (BUS) als auch direkt mit der DMA-Steuerung (DMA) verbunden ist, **gekennzeichnet** durch eine als Quittungsaustausch-Steuerung (HS) ausgebildete Einrichtung zur Steuerung des Datenaustauschs, die das an der Sende-/Empfangseinrichtung (USART) eintreffende Antwortzeichen der Folgestation decodiert und je nach Art des decodierten Zeichens entweder das jeweils nächstfolgende, mittels der DMA-Steuerung an den Sendepuffer der Sende-/Empfangseinrichtung (USART) übertragene Sendezeichen abhängig von einer Analyse des Anwortzeichens freigibt oder dessen Freigabe blockiert und im Mikroprozessor eine von mehreren, durch den Mikroprozessor abhängig vom Antwortzeichen ausgewählten, Unterbrechungsroutinen startet.

2. Schnittstellenschaltung nach Anspruch 1, **dadurch gekennzeichnet,** daß die Quittungsaustauschsteuerung (HS) eine erste Kippstufe (DFF1) enthält, deren als Sendesignal (CTS-N) an die Sende-/Empfangseinrichtung (USART) dienendes Ausgangssignal durch eine Freigabesignal (INTMBEN-P) aktiviert bzw. durch eine UND-Verknüpfung eines DMA-Sendekanalsignals (DACK0-N) und eines Schreibsignals (IOWR PER1-N) an die Sende/Empfangseinrichtung (USART) mit dem negierten Freigabesignal (INTMBEN-N) deaktiviert wird.

3. Schnittstellenschaltung nach Anspsruch 2, **dadurch gekennzeichnet,** daß eine zweite Kippstufe (DFF2) vorgesehen ist, die ein Sende-Empfangs- Zustandssignal (BAMEREI), gesteuert durch ein konjunktiv mit einem Schreibsignal (DMAMEMW-N) an den Speicher verknüpftes DMA-Empfangskanalsignal (DACKI-N), an ihrem Ausgang bereitstellt und daß dieses Ausgangssignal bei ansteigender Flanke des DMA-Empfangskanalsignals (DACKI-N) an den Ausgang der ersten Kippstufe (DFF1) durchgeschaltet wird.

## Claims

1. Interface circuit for character-oriented data transfer between a master station and a slave station, using a microcomputer with direct memory access control, and at least one transmitting/receiving device, connected to the bus system of the microcomputer, for connecting at least one slave station and with a device for controlling data exchange which is connected both to the bus system (BUS) and directly to the DMA control (DMA), characterised by a device constructed as handshake control (HS) for controlling the data exchange, which device decodes the response character of the slave station arriving at the transmitting/receiving device (USART) and, depending on the type of character decoded, either releases the in each case next transmit character, transmitted to the transmit buffer of the transmitting/receiving device (USART) by means of the DMA control, in dependence on an analysis of the response character, or blocks said transmit character's release and starts in the microprocessor one of several interrupt routines selected by the microprocessor in dependence on the response character.

2. Interface circuit according to Claim 1, characterised in that the handshake control (HS) contains a first flip-flop (DFF1), the output signal of which, used as transmit signal (CTS-N) to the transmitting/receiving device (USART), is activated by a release signal (INTMBEN-P) or deactivated by AND linkage of a DMA transmit channel signal (DACK0-N) and a write signal (IOWR PER1-N) to the transmitting/receiving device (USART) with the negated release signal (INTMBEN-N).

3. Interface circuit according to Claim 2, characterised in that a second flip-flop (DFF2) is provided which, controlled by a DMA receive channel signal (DACK1-N) logically conjunctively combined with a write signal (DMAMEMW-N) to the memory, provides a transmit/receive status signal (BAMEREI) at its output, and in that this output signal is switched through to the output of the first flip-flop (DFF1) with the rising edge of the DMA receive channel signal (DACK1-N).

**Revendications**

1. Circuit d'interface pour le transfert de données, caractère par caractère, entre un poste maître et un poste esclave moyennant l'utilisation d'un micro-ordinateur, avec une commande d'accès direct en mémoire et comportant au moins un dispositif d'émission/réception raccordé au système de bus du micro-ordinateur pour le raccordement d'au moins un poste esclave, et un dispositif pour commander l'échange de données, qui est raccordé aussi bien au système de bus (BUS) que directement à l'unité de commande DMA (DMA), caractérisé par un dispositif réalisé sous la forme d'une unité (HS) de commande d'échange d'accusés de réception et servant à commander l'échange de données et qui décode le caractère de réponse du poste esclave, qui arrive dans le dispositif d'émission/réception (USART) et, à la manière du caractère décodé, libère le caractère d'émission respectif immédiatement suivant, qui est transmis par l'unité de commande DMA au tampon d'émission du dispositif d'émission/réception (USART), en fonction d'une analyse du caractère de réponse, ou bien bloque la libération de ce caractère et déclenche, dans le microprocesseur, l'un de plusieurs sous-programmes d'interruption, sélectionnés par le microprocesseur en fonction du caractère de réponse.

2. Circuit d'interface suivant la revendication 1, caractérisé par le fait que l'unité (HS) de commande d'échange d'accusés de réception comporte un premier étage à bascule (DFF1), dont le signal de sortie utilisé comme signal d'émission (CTS-N) envoyé au dispositif d'émission/réception (ESART), est activé par un signal de libération (INTMBEN-P) ou est désactivé par une combinaison ET d'un signal (DACKO-N) du canal d'émission DMA et d'un signal d'enregistrement (IOWR PER1-N) envoyé au dispositif d'émission/réception (ESART) avec le signal de libération négativé (INTMBEN-N).

3. Circuit d'interface suivant la revendication 2, caractérisé par le fait qu'il est prévu un second étage à bascule (DFF2), qui, d'une manière commandée par un signal (DACK1-N) du canal de réception DMA combiné d'une manière conjonctive au signal d'enregistrement (DMAMENW-N) appliqué à la mémoire, prépare à sa sortie un signal d'état d'émissionréception (BAMEREI), et que ce signal de sortie est transmis directement à la sortie du premier étage à bascule (DFF1) lors de l'apparition du flanc montant du signal (DACK1-N) du canal de réception DMA.

## FIG 1

MSF                                                DSS

DAA,DAA → **DMA** → DAA,DAA →

↑

**HS**

↑

MM ← **DMA** ← DT,DT,MB(Bit $2^7$=0),DT

IC ← ▢ ← MB(Bit $2^7$=1)

## FIG 2

→ **DMA** → DT,DT →

↑

**HS**

↑

← **DMA** ← MB(Bit $2^1$od....Bit $2^4$=0)

IC ← ▢ ← MB(Bit $2^1$od....Bit $2^4$=1)

## FIG 3

## FIG 4